# EUROPEAN PATENT APPLICATION

(11) **EP 2 938 168 A1**
(43) Date of publication of application: **28.10.2015**
(21) Application number: 13864913.2
(22) Date of filing: 18.12.2013
(51) Int. Cl.: H05B 41/26, H01J 61/06, H01J 61/86, H05B 41/282

(54) **DISCHARGE LAMP LIGHTING DEVICE**

(30) Priority: 21.12.2012 JP 2012279115
(71) Applicant: Ushio Denki Kabushiki Kaisha, Tokyo 100-8150 (JP)
(72) Inventor: KONO, Yoichi, Himeji-shi Hyogo 671-0224 (JP)
(74) Representative: Tomerius, Isabel
(86) International application number: PCT/JP2013/083894
(87) International publication number: WO 2014/098127

(57) **Abstract**

Disclosed herein a discharge lamp lighting device capable of suppressing an occurrence of a flicker and obtaining a longer life till flicker even when the discharge lamp lights up for a long time. The device comprises a short arc type discharge lamp; a lighting circuit for supplying power to the discharge lamp; and a controller for controlling the lighting circuit. The discharge lamp has: an arc tube; an anode and a cathode disposed in the arc tube with the anode and the cathode facing each other; and a xenon gas enclosed in the arc tube, and the cathode includes an electron emissive material and a carbon component. The controller includes a short time lighting circuit for carrying out a short time lighting operation that lights up the discharge lamp at least once in a short time during an idle period in which the discharge lamp does not constantly light up.

## Description

### FIELD OF THE INVENTION

The present invention relates to a discharge lamp lighting device. More particularly, the present invention relates to a discharge lamp lighting device that may be used as a light source for a cinema projector in a movie theater.

### DESCRIPTION OF THE RELATED ART

Recent years, particularly in a movie theater, a conventional film type cinema projector has been rapidly replaced with a digital type cinema projector. In both cases of the film type cinema projector and the digital type cinema projector, a discharge lamp such as a short arc type xenon discharge lamp or the like is widely and commonly used for a light source.

However, the luminance (brightness) required for the discharge lamp of the digital type cinema projector is different from the luminance (brightness) required for the discharge lamp of the film type cinema projector. More particularly, in the digital type cinema projector, when light is condensed on an end face (edge face) of an integrator rod, it is required to condense light within a narrower scope of an area in comparison with the film type cinema projector.

For this reason, in the discharge lamp for the digital type cinema projector, a noble gas (e.g., a xenon gas) is enclosed at (under) substantially higher pressure in order to form a shorter and thinner arc, than in the discharge lamp for the film type cinema projector.

As a conventional discharge lamp lighting device which is provided with this type of discharge lamp, one of the discharge lamp lighting device is known that is provided with a controller which controls current supplied to the discharge lamp when the discharge lamp starts to light up (emit light) (see, e.g., Japanese Patent Application Laid-open Publication No. 2012-22999A: Patent Literature 1). Likewise, another discharge lamp lighting device is also known that is provided with a controller which dims (modulates) the light of the discharge lamp by changing current supplied to the discharge lamp (see, e.g., Japanese Patent Application Laid-open Publication No. 2012-160387A: Patent Literature 2).

Meanwhile, in the xenon discharge lamp, a flicker occurs because, for example, a cathode is deformed over time as lighting time elapses. In this case, a period (duration) from when the discharge lamp starts to be used (i.e., light up or emit light) to when the flicker frequently occurs is referred to as a "life till flicker" or "life until the flicker occurs".

Conventionally, as a xenon discharge lamp that can obtain a longer life till flicker, one xenon discharge lamp has been proposed that is provided with a cathode including a surface layer in which a striped (banded) tungsten carbide phase is formed in a tungsten phase at a front end (front edge) face (see, e.g., Japanese Patent Application Laid-open Publication No. 2012-150951A: Patent Literature 3).

In the cinema theater, with dissemination of the digital type cinema projector, these days the cinema projector can be operable even by a person other than a cinematographer with an expert special skill. Moreover, a variety of formats, which are not only a main chapter of a cinema but also an advertising video or the like, can be replayed. Thus, a total screen time of a day becomes longer. Along with the longer total screen time, the discharge lamp serving as the light source has been also consecutively lit (has emitted light) for a longer time. Accordingly, certain type of discharge lamp has been desired that has a longer life till flicker for the light source of the digital type cinema projector.

### LISTING OF REFERENCES

### PATENT LITERATURES

Patent Literature 1: Japanese Patent Application Laid-open Publication No. 2012-022999A
Patent Literature 2: Japanese Patent Application Laid-open Publication No. 2012-160387A
Patent Literature 3: Japanese Patent Application Laid-open Publication No. 2012-150951A

### SUMMARY OF THE INVENTION

### Problems to be Solved by the Invention

The present invention has been made in view of the above mentioned circumstances and its object is to provide a discharge lamp lighting device that is capable of suppressing the occurrence of the flicker and obtaining a longer life till flicker even when the discharge lamp lights up (emits light) for a long time.

### Solution to the Problem

According to one aspect of the present invention, there is provided a discharge lamp lighting device comprising: a short arc type discharge lamp; a lighting circuit for supplying power to the discharge lamp; and a controller for controlling the lighting circuit. The short arc type discharge lamp comprises: an arc tube, an anode and a cathode disposed with facing (opposing) each other in the arc tube; and a xenon gas enclosed in the arc tube, and the cathode contains an electron emissive material and a carbon component. The controller comprises a short time lighting circuit for carrying out a short time lighting operation that lights up the discharge lamp at least once or more in a short time during an idle (dormant) period in which the discharge lamp is not lit up (does not emit light) constantly (regularly).

According to another aspect of the discharge lamp lighting device of the present invention, a total lighting time during (in) the short time lighting operating is, preferably, 0.1 to 700 seconds.

Moreover, according to another aspect of the discharge lamp lighting device of the present invention, a number of lightings during (in) the short time lighting operation is, preferably, 1 to 20 times.

Yet moreover, according to another aspect of the discharge lamp lighting device of the present invention, a lighting time per one short time lighting in the short time lighting operation is, preferably, 0.1 to 5 seconds.

Yet moreover, according to another aspect of the discharge lamp lighting device of the present invention, an off time from when one short time lighting ends (is terminated) to when a subsequent short time lighting starts is, preferably, equal to or greater than one second, when a number of lightings during (in) the short time lighting operation is twice or more.

### Advantageous Effect of the Invention

According to the above mentioned aspects of the discharge lamp lighting device of the present invention, the short time lighting circuit of the controller carries out the short time lighting operation that lights up the discharge lamp in a short time during the idle (dormant) period in which the discharge lamp is not lighted up (does not emit light) constantly (regularly). As a result, the occurrence of the flicker can be efficiently suppressed even when the discharge lamp lights up (emits light) for a long time so that a longer life till flicker can be obtained.

### BRIEF DESCRIPTION OF THE DRAWINGS

Fig. 1 is a schematic view showing a configuration of one illustrative example of the discharge lamp lighting device of the present invention;
Fig. 2 is a cross-sectional view showing a configuration of one illustrative example of the discharge lamp which is used for the discharge lamp lighting device shown in Fig. 1;
Fig. 3 is an enlarged schematic view showing a cathode body in which a tungsten carbide layer is provided and an anode body together;
Fig. 4 is a timing chart showing one illustrative example of a prescribed timing in which the short time lighting operation is carried out in the discharge lamp lighting device of the present invention;
Fig. 5 is a graph showing a relationship between an amplitude of lamp voltage and a lighting time of the discharge lamps of a Working Example 1 and a Comparative Experimental Example 1;
Fig. 6 is a graph showing a relationship between an amplitude of lamp voltage and a lighting time of the discharge lamps of a Working Example 2 and a Comparative Experimental Example 2; and
Fig. 7 is a graph showing a relationship between an amplitude of lamp voltage and a number of short time lightings of the discharge lamp of a Working Example 3.

### DETAILED DESCRIPTION OF THE INVENTION

Hereinafter, embodiments of a discharge lamp lighting device (apparatus) according to the present invention will be explained in detail with reference to the drawings attached hereto.

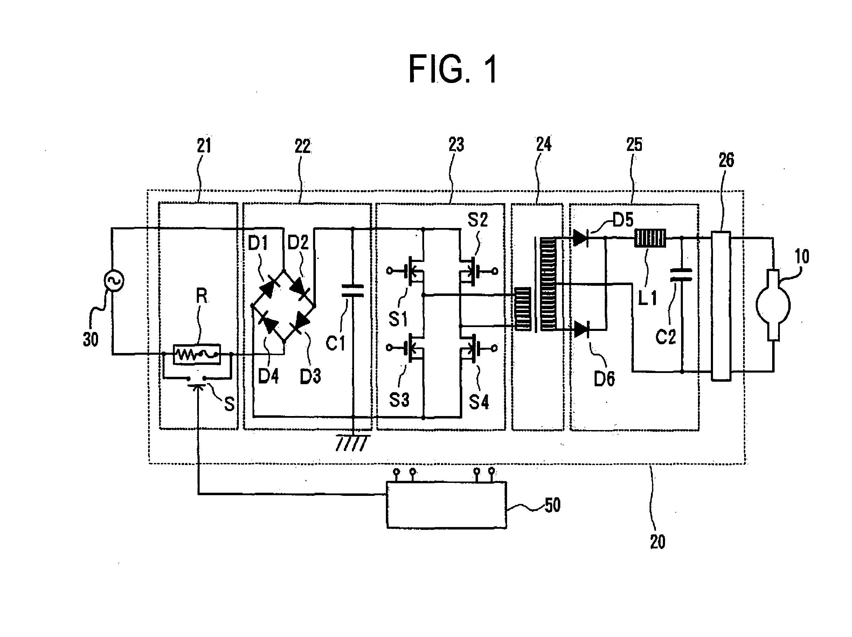

Fig. 1 is a schematic view showing a configuration of one illustrative example of the discharge lamp lighting device according to the present invention. The discharge lamp lighting device shown in Fig. 1 may be used as a light source for, for example, a digital type cinema projector in a movie theater. This the discharge lamp lighting device comprises a discharge lamp 10, a lighting circuit 20 which supplies power to the discharge lamp 10, and a controller 50 which controls the lighting circuit 20.

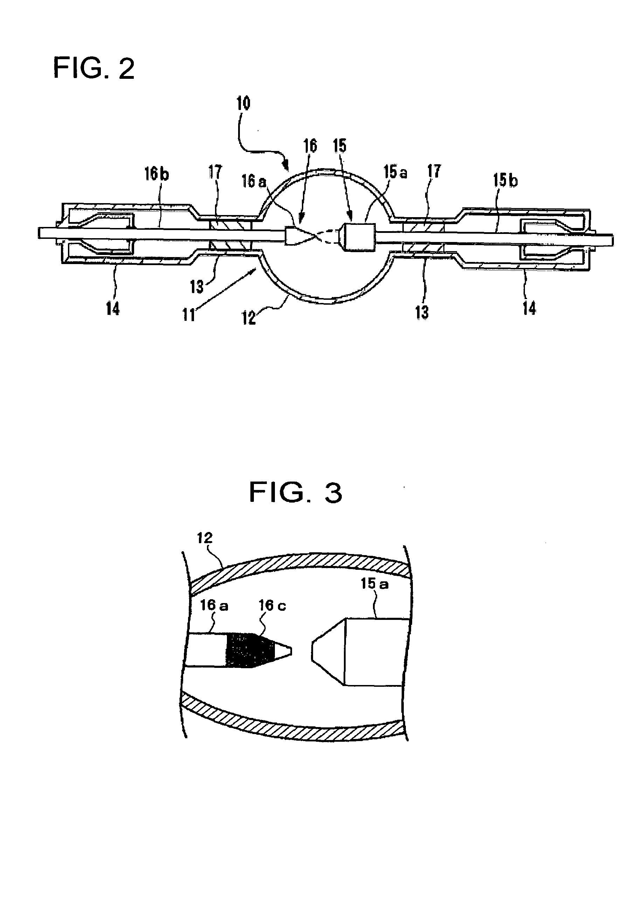

Fig. 2 is a cross-sectional view showing a configuration of one illustrative example of the discharge lamp which is used for the discharge lamp lighting device shown in Fig. 1.

This discharge lamp 10 in Fig. 2 is a short arc type xenon discharge lamp. An arc tube 11 of the discharge lamp 10 is made of, for example, a quartz glass.

Furthermore, the arc tube 11 includes a luminous portion 12, electrode support portions 13, and sealing portions 14. The luminous portion 12 forms a discharge space inside and has an outer shape of a substantially elliptic sphere. Each of the electrode support portions 13 is integrally and continuously connected to each of both ends of the luminous portion 12, extends outwardly along a tube axis, and has a cylindrical shape. Each of the sealing portions 14 is integrally and continuously connected to each of outer ends of the electrode support portions 13, and has a larger outer diameter than an outer diameter of the electrode support portion 13.

Inside the luminous portion 12 of the arc tube 11, an anode 15 and a cathode 16, both of which consist of a high melting point metal such as tungsten or the like, are arranged in a way that the anode 15 and the cathode 16 face (oppose) each other.

More particularly, the anode 15 comprises an electrode rod 15b which extends along the direction of the tube axis of the arc tube 11, and an anode body 15a disposed at a front end (front edge, tip end) of the electrode rod 15b. The anode body 15a comprises a body portion having a cylindrical shape and a front end (front edge, tip end) portion having a truncated conical shape.

On the other hand, the cathode 16 comprises an electrode rod 16b having a rod shape and extending along the direction of the tube axis of the arc tube 11, and a cathode body 16a disposed at a front end (tip end) of the electrode rod 16b. The cathode body 16a comprises a rear end portion having a cylindrical shape and a front end (tip end) portion having a substantially conical shape.

Furthermore, the anode 15 and the cathode 16 are arranged in a way that the anode body 15a and the cathode body 16a face (oppose) each other, and each of the electrode rods 15b, 16b protrudes from each of both ends of the arc tube 11 through the electrode support portions 13 and the sealing portions 14.

Yet furthermore, glass members 17 are provided on peripheral surfaces of portions of the electrode rods 15b, 16b which are positioned at the electrode support portions 13, respectively.

The distance between the anode 15 and the cathode 16 (i.e., the distance between electrodes) is, for example, 2 to 10 mm.

The cathode body 16a is required to be equipped with a function to emit an electron. For this reason, the cathode body 16a contains an electron emissive material that is an emitter (emissive) material to lower the work function. As the electron emissive material to be contained in the cathode body 16a, either of thorium oxide (ThO₂), barium oxide (BaO), strontium oxide (SrO), calcium oxide (CaO) or the like or any combination thereof is capable to be used.

When thorium oxide (ThO₂) is used as the electron emissive material, as thorium oxide (ThO₂) has a high operating temperature (i.e., the temperature at which thorium oxide functions as the emitter), it is preferable that thorium oxide is contained in whole cathode body 16a or otherwise only at the front end portion of the cathode body 16a.

On the other hand, when barium oxide (BaO), strontium oxide (SrO) or calcium oxide (CaO) is used as the electron emissive material, as either of those has a low operating temperature, it is preferable that either of those is contained inside the cathode body 16a.

The cathode body 16a has a carbon component. One embodiment of the cathode body 16a having the carbon component is, as shown in Fig. 3, a configuration in which a tungsten carbide layer 16c is provided adjacent to the front end of the cathode body 16a. As the location at which the tungsten carbide layer 16c is formed, the tungsten carbide layer 16c is preferably positioned at a location retracted by at least 2 mm along the axis direction from the front end face of the cathode body 16a of the cathode 16. Furthermore, the thickness of the tungsten carbide layer 16c is, preferably, 15 to 100 µm.

When the tungsten carbide layer (W₂C or WC) with low melting point is formed at the front end with the thickness equal to or greater than 15µm, then a melting (meltage) amount at the front end portion of the cathode body 16a becomes excessive. For this reason, a diameter of the front end of the cathode body 16a is damaged in a short time so that the luminous (brightness) is lowered. Alternatively, an inner surface of the arc tube 12 is blackened and the intensity of the radiated light is lowered due to an evaporation of tungsten carbide (W₂C or WC) so that it comes to an end of a life of lamp earlier. In order to avoid the above mentioned drawbacks, it is preferable not to form the tungsten carbide layer 16c at the front end of the cathode body 16a.

A xenon gas as a luminous gas is enclosed inside the luminous portion 12 of the arc tube 11. A charged (pre-charge, enclosure) pressure of the xenon gas is, for example, 0.5 to 5.0 MPa at a static pressure. Also, mercury is not enclosed inside the luminous portion 12. Furthermore, as so-called halogen cycle mechanism is not employed, halogen such as bromine or the like is not enclosed as well.

In addition, the rated current of the discharge lamp 10 is, for example, 25 to 175 A, the rated voltage is, for example, 20 to 45 V, and the rated power is, for example, 1 to 8 kW.

The lighting circuit 20 exemplarily shown in Fig. 1 operates with so-called switching method. This lighting circuit 20 comprises a soft start circuit 21, a first rectifier and smoothing circuit 22, an inverter circuit 23, a transformer circuit 24, a second rectifier and smoothing circuit 25, and an igniter (ignitor) 26.

The soft start circuit 21 reduces inrush current when the discharge lamp 10 lights up (is lit up, starts to emit light). This soft start circuit 21 comprises a resistor R consisting of a resistor (resistive) element and a fuse, and a switching element S operable with a command signal from the controller 50.

The first rectifier and smoothing circuit 22 converts alternating current (AC) power from the soft start circuit 21 to direct current (DC) power, and smoothens the converted direct current (DC) power. The first rectifier and smoothing circuit 22 comprises a bridge circuit consisting of four rectifier diodes D1 to D4, and a capacitor C1.

The inverter circuit 23 converts the direct current (DC) power from the first rectifier and smoothing circuit 21 to high frequency power of, for example, 20 to 1000 kHz. This inverter circuit 23 comprises a bridge circuit consisting of four switching elements S1 to S4 which are operable with, for example, a pulse width control signal or the like from the controller 50.

The transformer circuit 24 transforms voltage of the high frequency power input at the primary side from the inverter circuit 23 to voltage suitable for lighting up the discharge lamp 10 to output the transformed voltage from the secondary side.

The second rectifier and smoothing circuit 25 converts the high frequency power output from the secondary side of the transformer circuit 24 to the direct current (DC) power and smoothens the converted direct current (DC) power. The second rectifier and smoothing circuit 25 comprises two rectifier diodes D5, D6, an inductor L1, and a capacitor C2.

The igniter 26 applies high voltage only when the discharge lamp 10 starts to light up (emit light).

The controller 50 comprises a control circuit which controls the lighting circuit 20. The controller 50 also comprises a short time lighting circuit which carries out the short time lighting operation that lights up the discharge lamp 10 at least once or more in a short time during the idle period in which the discharge lamp 10 does not light up (emit light) constantly (regularly).

According to the discharge lamp lighting device of the present embodiment, when the igniter 26 in the lighting circuit 20 is activated (operated), then a high voltage is applied between the anode 15 and the cathode 16 of the discharge lamp 10 so that the insulation breakdown occurs. It allows the current to start to flow in the discharge lamp 10.

After the insulation breakdown occurs, a value of a lamp current which flows in the discharge lamp 10 increases, and it transitions into the arc discharge through the glow discharge. When the lamp current then reaches a peak value, then the temperature of the anode 15 and the cathode 16 increases up to sufficient temperature. Thus, a stable arc discharge is formed. Subsequently, with the required direct current (DC) power being supplied from the lighting circuit 20, the constant lighting (regular lighting) of the discharge lamp 10 can be accomplished.

Yet according to the discharge lamp lighting device of the present embodiment, the short time lighting circuit of the controller 50 carries out the short time lighting operation that lights up the discharge lamp 10 at least once or more in a short time during the idle period in which the discharge lamp 10 does not light up (emit light) constantly (regularly).

The short time lighting operation of the discharge lamp 10 can be carried out by supplying to the discharge lamp 10 a direct current (DC) single pulse wave or a group of direct current (DC) single pulse waves, which consist of one or a plurality of single pulse waves having one of polarity of, for example, the direct current. The direct current (DC) single pulse wave forms a waveform formed by a steep rise and fall of a lamp current. The direct current (DC) single pulse wave is supplied to the discharge lamp 10 by an operation of the lighting circuit 20 and the controller 50 with a similar process to the constant (regular) lighting of the discharge lamp 10.

In the above mentioned operation, a prescribed timing for carrying out the short time lighting operation can be appropriately set, as long as the discharge lamp 10 is within the idle period in which the discharge lamp 10 does not light up (emit light) constantly (regularly).

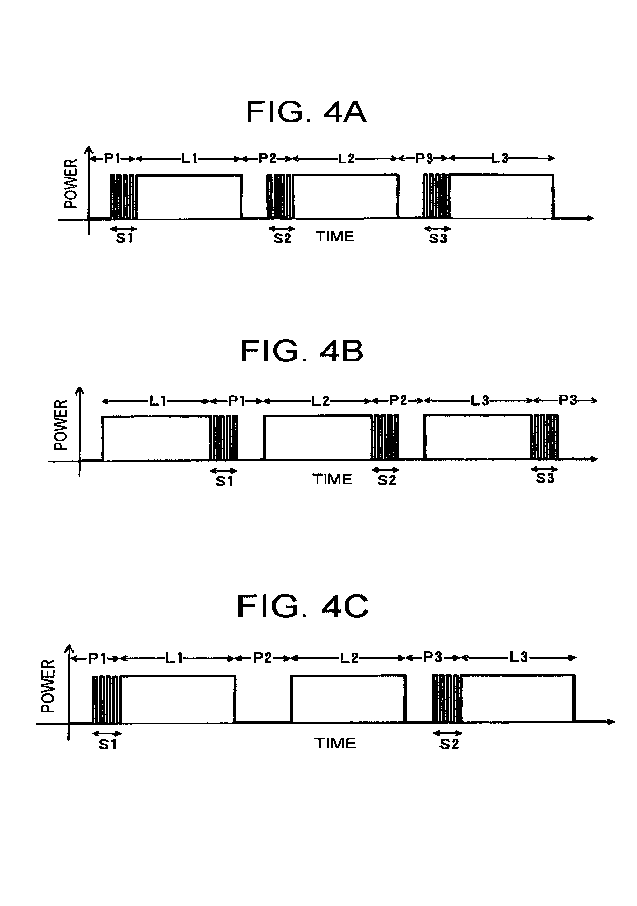

Figs. 4A to 4C show illustrative concrete examples of the prescribed timings in which the discharge lamp lighting device of the present embodiment carries out the short time lighting operation. In Figs. 4A to 4C, L1, L2 and L3 denote constant (regular) lighting periods, respectively, in which the discharge lamp lights up (emits light) constantly (regularly). Likewise, P1, P2 and P3 denote idle periods, respectively, in which the discharge lamp does not light up (emit light) constantly (regularly). Yet likewise, S1, S2 and S3 denote the short time lighting operation periods, respectively, in which the short time lighting operation is carried out.

The short time lighting operation may be, as shown in Fig. 4A, carried out immediately before the constant (regular) lighting of the discharge lamp starts during the idle period. Alternatively, the short time lighting operation may be, as shown in Fig. 4B, carried out immediately after the constant (regular) lighting of the discharge lamp ends during the idle period, or other any timings as long as it is carried out during the idle period.

Furthermore, the short time lighting operation may not necessarily carried out in every idle period. For example, the short time lighting operation may be, as shown in Fig. 4C, carried out once per every two idle periods.

Moreover, the total lighting time of the discharge lamp 10 during (in) the short time lighting operation is, for example, 0.1 to 700 seconds, and, preferably, 0.1 to 100 seconds.

Preferably, a number of lightings during the short time lighting operation (i.e., a number of direct current (DC) single pulse wave supplied to the discharge lamp 10 in the short time lighting operation) is 1 to 20 times (that is, 1 to 20 of the direct current (DC) single pulse waves). When the number of lightings during the short time lighting operation exceeds 20 times, then the cathode 16 is worn and damaged considerably to cause the luminous (brightness) to be lowered, and/or the anode 15 is subject to the thermal shock to cause the crack to occur so that the life of lamp becomes shorter.

Furthermore, preferably, lighting time per one short time lighting during the short time lighting operation (that is, the temporal length of the direct current (DC) single pulse wave supplied to the discharge lamp 10) is 0.1 to 5 seconds. When the lighting time per one short time lighting is less than 0.1 second, then the temperature of the cathode 16 cannot sufficiently increase so that the front end of the cathode 16 is not activated. On the other hand, when the lighting time per one short time lighting is greater than 5 seconds, then the front end of the cathode 16, which has been once activated, moves towards an inactivation again so that a sufficient effect due to the short time lighting may not be obtained.

Yet furthermore, when the number of times of lighting during the short time lighting operation is twice or more, then an OFF time from when one short time lighting ends to when a subsequent short time lighting starts is, preferably, equal to or greater than 1 second, and more preferably, 5 to 30 seconds. When the OFF time is less than 1 second, then the temperature of the cathode 16 does not sufficiently decrease. Thus, a sufficient thermal shock may not be obtained at the time of next short time lighting so that the sufficient effect of the short time lighting may not obtained.

According to the above mentioned discharge lamp lighting device, the short time lighting circuit of the controller 50 carries out the short time lighting operation that lights up the discharge lamp 10 in a short time when the discharge lamp 10 does not light up (emit light) constantly (regularly). As a result, the occurrence of the flicker of the discharge lamp 10 is capable of being suppressed so that a longer life till flicker is capable of being obtained, even when the discharge lamp 10 lights up (emits light) for a long time.

The reason is not yet completely figured out why the flicker of light of the discharge lamp 10 can be suppressed and a longer life till flicker can be obtained. Nevertheless, the reason may be presumed, for example, as follows.
(1) A surface shape of the cathode body 16a is roughened and in a worn out state immediately after the extinction of the light of the discharge lamp 10 (i.e., the discharge lamp 10 stops to emit light). Subsequently, when the short time lighting operation is carried out to the discharge lamp 10, then the surface of the cathode body 16a melts to become a smoothened shape due to heat by the lighting. Thus, with the surface of the cathode body 16a being restored to the smoothened shape, a quick and smooth starting operation can be carried out when the discharge lamp 10 starts to light up (emit light) again. As a result, the front end of the cathode body 16a becomes hardly to be worn out and damaged so that the occurrence of the flicker can be suppressed.
(2) The cathode body 16a contains a carbon component in, for example, the tungsten carbide layer 16c. For example, the tungsten carbide has a function to reduce an emitter oxide to a reduced emitter. The carbon used for the reduction is then binds with oxygen of the emitter oxide to become carbon monoxide or carbon dioxide to be supplied to the discharge lamp. When the supplied carbon monoxide or carbon dioxide is spread in the discharge arc, then it is decomposed in the plasma to become carbon ion. The carbon ion is drawn to the cathode 16 side, as the carbon ion is a positive ion, to strike against the surface of the cathode body 16a, so that it deposits as tungsten carbide again.
   Here, as the tungsten carbide which is deposited on the surface of the cathode body 16a has a lower melting point than normal tungsten, the tungsten carbide is more likely to melt due to the heat by the lighting even if the lighting is in a short time. As a consequence, it is considered that the tungsten carbide, which is more likely to melt, melts due to the short time lighting to assist the above mentioned acting (mechanism) as described above (1).
(3) After the extinction (lighting off) of the discharge lamp 10, the emitter has dispersed (disappeared) from the surface of the cathode body 16a. Nevertheless, once the short time lighting is carried out, the electron emissive material is reduced and then supplied to the surface of the cathode body 16a due to the heat by the lighting. Also, when the discharge lamp 10 starts to light up (emit light), as the emitter has been supplied to the surface of the cathode body 16a, a quick and smooth starting operation can be carried out. As a result, it is considered that the front end of the cathode body 16a becomes hardly to be worn out and damaged so that the occurrence of the flicker can be suppressed.

As described above, embodiments of the discharge lamp lighting device according to the present invention have been explained. Nevertheless, the present invention is not limited to the above described exemplary embodiments, and various modifications and/or replacements can be made without departing from the gist of the present invention.

For example, the lighting circuit is not limited to those shown in Fig. 1 and various configuration can be employed instead.

### EXAMPLES

### Working Example 1

According to the configuration shown in Fig. 2, the discharge lamp with a below described specification (i.e., a short arc type xenon discharge lamp) was fabricated. With employing the fabricated discharge lamp, according to the configuration shown in Fig. 1, the discharge lamp lighting device was fabricated.

### Specification of the Discharge Lamp

- The arc tube was made of quartz glass, the maximum outer diameter of the luminous portion was 42 mm, and an internal volume of the luminous portion was 40 mm³.
- the anode and cathode were made of tungsten, respectively, and the distance between electrodes was 3.0 mm.
- Overall (whole) cathode body contained thorium oxide as an electron emissive material.
- A tungsten carbide layer was disposed adjacent to the front end of the cathode body. The tungsten carbide layer was formed at a position retracted by 2 mm along the axis direction from the front end face of the cathode body. The thickness of the tungsten carbide layer was 30 µm.
- A xenon gas was enclosed at a static pressure of 1.6 MPa in the art tube.
- Rated current of the discharge lamp was 75 A, likewise, the rated voltage was 24 V, and the rated power was 1.8 kW thereof.

With employing the above mentioned discharge lamp lighting device, constant (regular) lightings of the discharge lamp were repeatedly carried out according to the condition (1) described below. In addition, the short time lighting operation was carried out according to the condition (2) described below immediately before the constant (regular) lighting started during the idle period.
(1) Constant (Regular) Lighting Condition
   Constant (Regular) Lighting Period: 2 hours
   Idle Period: 30 minutes
(2) Short Time Lighting Operation Condition
   Lighting Time per One Short Time Lighting (i.e., Temporal Length of Direct Current Single Pulse Wave): 1 second
   A Number of Times of Lighting of the Short Time Lighting: 5 times (i.e., the number of the direct current single pulse waves was 5)
   Total Lighting Time of the Short Time Lighting: 5 seconds
   OFF Time from When One Short Time Lighting Ended to When Subsequent Short Time Lighting Started: 15 seconds

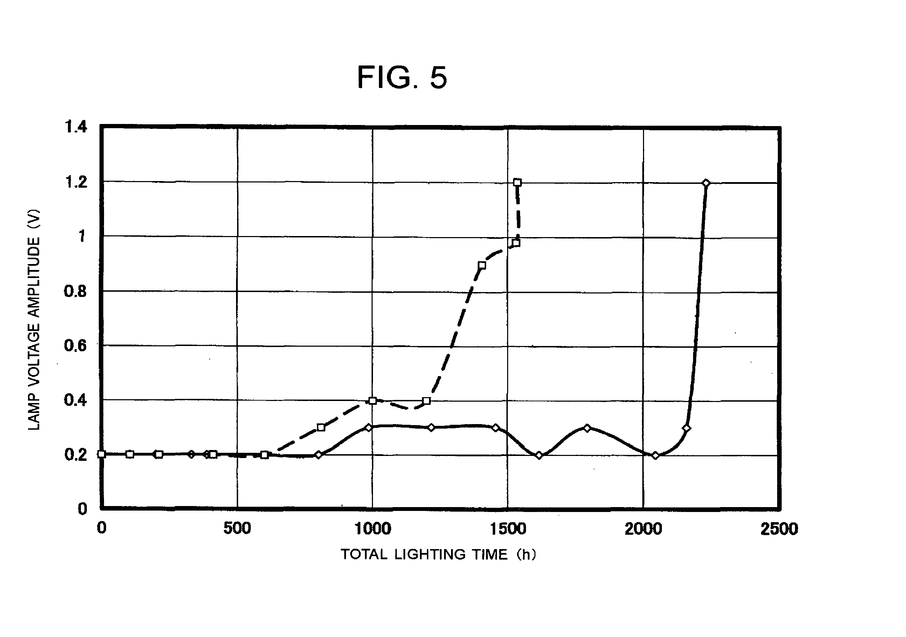

Then the relationship between the amplitude of the lamp voltage and the total lighting time of the discharge lamp was observed, according to the findings that the amplitude of the lamp voltage becomes larger (i.e., the variation of values of the lamp voltage in a short time), once (as) the flicker occurs. Fig. 5 shows the experimental results of the Working Example 1 in a solid line.

Further, the total lighting time was measured until when the amplitude of the lamp voltage became equal to or greater than 1.2 V, which was identifiable as the life till flicker. As a result, the measured life till flicker of the discharge lamp was 2200 hours.

### Comparative Experimental Example 1

Except that the short time lighting operation was not carried out, the discharge lamp was lit on (emitted light) constantly (regularly) according to the similar condition to the above described Working Example 1, and the relationship between the amplitude of the lamp voltage and the total lighting time of the discharge lamp was observed. Fig. 5 shows the experimental results of the Comparative Experimental Example 1 in a dashed line.

Further, the life till flicker of the discharge lamp was measured similarly to the Working Example 1. As a result, the measured life till flicker of the discharge lamp was 1500 hours.

### Working Example 2

With employing the discharge lamp lighting device having a similar configuration to the Working Example 1, constant (regular) lightings of the discharge lamp were repeatedly carried out according to the condition (1) described below. In addition, the short time lighting operation was carried out according to the condition (2) described below immediately after the constant (regular) lighting stopped during the idle period (see, Fig. 4B).
(1) Constant (Regular) Lighting Condition
   Constant (Regular) Lighting Period: 2 hours
   Idle Period: 30 minutes
(2) Short Time Lighting Operation Condition
   Lighting Time per One Short Time Lighting (i.e., Temporal Length of Direct Current Single Pulse Wave): 1 second
   A Number of Times of Lighting of the Short Time Lighting: 5 times (i.e., the number of the direct current single pulse waves was 5)
   Total Lighting Time of the Short Time Lighting: 5 seconds
   OFF Time from When One Short Time Lighting Ended to When Subsequent Short Time Lighting Started: 15 seconds

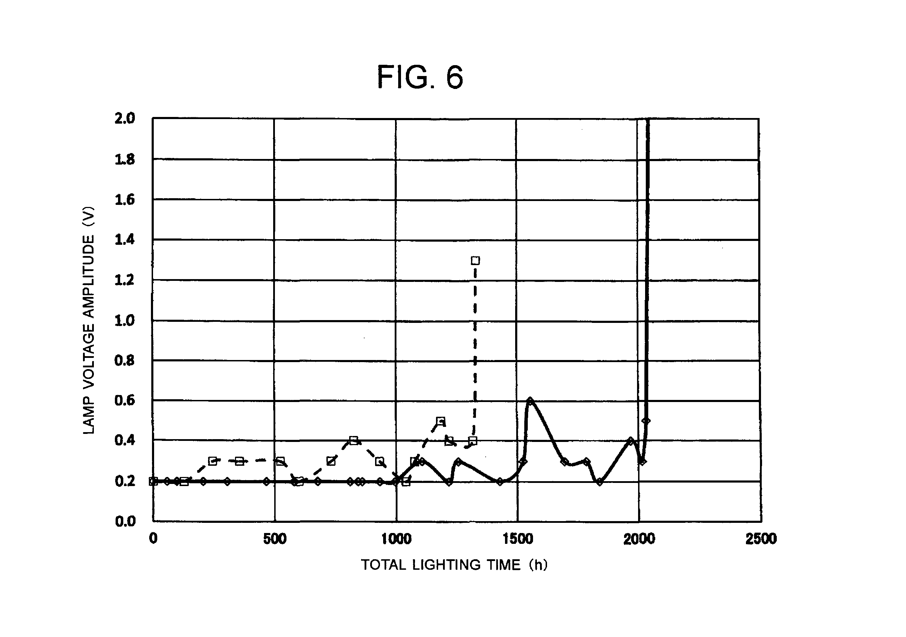

Then the relationship between the amplitude of the lamp voltage and the total lighting time of the discharge lamp was observed, according to the findings that the amplitude of the lamp voltage becomes larger (i.e., the variation of values of the lamp voltage in a short time), once (as) the flicker occurs. Fig. 6 shows the experimental results of the Working Example 2 in a solid line.

Further, the total lighting time was measured until when the amplitude of the lamp voltage became equal to or greater than 1.2 V, which was identifiable as the life till flicker. As a result, the measured life till flicker of the discharge lamp was 2200 hours.

### Comparative Experimental Example 2

Except that the short time lighting operation was not carried out, the discharge lamp was lit on (emitted light) constantly (regularly) according to the similar condition to the above Working Example 2, and the relationship between the amplitude of the lamp voltage and the total lighting time of the discharge lamp was observed. Fig. 6 shows the experimental results of the Comparative Experimental Example 2 in a dashed line.

Further, the life till flicker of the discharge lamp was measured similarly to the Working Example 2. As a result, the measured life till flicker of the discharge lamp was 1300 hours.

As apparent from the above experimental results, it was confirmed that, by carrying out the short time lighting operation when the discharge lamp did not light up (emit light) constantly (regularly), the occurrence of the flicker was suppressed and a longer life till flicker was obtained.

### Working Example 3

According to the configuration shown in Fig. 2, the discharge lamp with a below described specification was fabricated. With employing the fabricated discharge lamp, according to the configuration shown in Fig. 1, the discharge lamp lighting device was fabricated.

### Specification of the Discharge Lamp

- The arc tube was made of quartz glass, the maximum outer diameter of the luminous portion was 42 mm, and an internal volume of the luminous portion was 40 mm³.
- the anode and cathode were made of tungsten, respectively, and the distance between electrodes was 3.0 mm.
- Overall (whole) cathode body contained thorium oxide as an electron emissive material.
- A tungsten carbide layer was disposed adjacent to the front end of the cathode body. The tungsten carbide layer was formed at a position retracted by 2 mm along the axis direction from the front end face of the cathode body. The thickness of the tungsten carbide was 30 µm.
- A xenon gas was enclosed at a static pressure of 1.9 MPa in the art tube.
- The rated current of the discharge lamp was 75 A, likewise, the rated voltage was 24 V, and the rated power was 1.8 kW thereof.

With employing the above mentioned discharge lamp lighting device, the constant (regular) lightings of the discharge lamp were repeatedly carried out according to the condition (1) described below. In addition, the short time lighting operation was carried out according to the condition (2) described below immediately before the constant (regular) lighting started during the idle period (see, Fig. 4A).
(1) Constant (Regular) Lighting Condition
   Constant (Regular) Lighting Period: 2 hours
   Idle Period: 30 minutes
(2) Short Time Lighting Operation Condition
   Condition "a": The short time lighting operation was not carried out
   Condition "b":
   Lighting Time per One Short Time Lighting (i.e., Temporal Length of Direct Current Single Pulse Wave): 1 second
   A Number of Times of Lighting of the Short Time Lighting: 5 times (i.e., the number of the direct current single pulse waves was 5)
   Total Lighting Time of the Short Time Lighting: 5 seconds
   OFF Time from When One Short Time Lighting Ended to When Subsequent Short Time Lighting Started: 15 seconds
   Condition "c":
   Lighting Time per One Short Time Lighting (i.e., Temporal Length of Direct Current Single Pulse Wave): 1 second
   A Number of Times of Lighting of the Short Time Lighting: 20 times (i.e., the number of the direct current single pulse waves was 20)
   Total Lighting Time of the Short Time Lighting: 20 seconds
   OFF Time from When One Short Time Lighting Stopped to When Subsequent Short Time Lighting started: 15 seconds

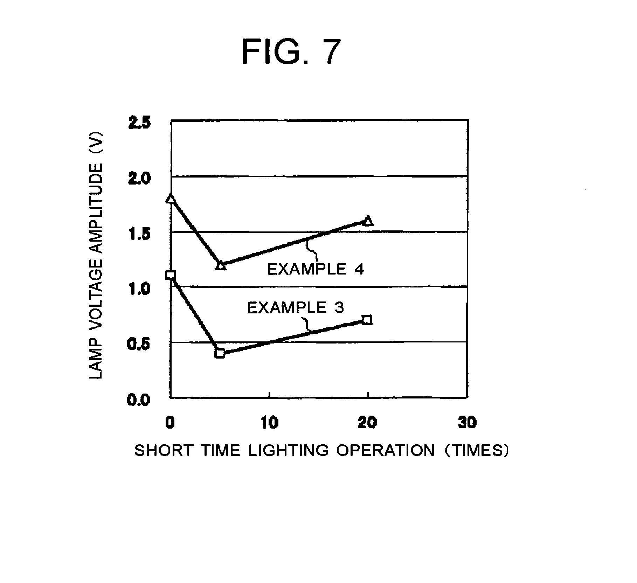

Then the amplitude of the lamp voltage was measured when 250 hours of the total lighting time of the discharge lamp elapsed. Further, the relationship between the amplitude of the lamp voltage and the number of lightings of the short time lighting was observed. Fig. 7 shows the experimental results of the Working Example 3.

### Working Example 4

Except that the discharge lamp was replaced with the configuration with below described specification, the discharge lamp was lit on (emitted light) constantly (regularly) and the short time lighting operation was carried out according to the similar condition to the above Working Example 3. Then the amplitude of the lamp voltage was measured when 250 hours of the total lighting time of the discharge lamp elapsed. Further, the relationship between the amplitude of the lamp voltage and the total lighting time of the discharge lamp was observed. Fig. 7 shows the experimental results of the Working Example 4.

### Specification of the Discharge Lamp

- The arc tube was made of quartz glass, the maximum outer diameter of the luminous portion was 42 mm, and an internal volume of the luminous portion was 40 mm³.
- the anode and cathode were made of tungsten, respectively, and the distance between electrodes was 3.7 mm.
- Overall (whole) cathode body contained thorium oxide as an electron emissive material.
- A tungsten carbide layer was disposed adjacent to the front end of the cathode body. The tungsten carbide layer was formed at a position retracted by 2 mm along the axis direction from the front end face of the cathode body. The thickness of the tungsten carbide was 30 µm.
- A xenon gas was enclosed at a static pressure of 1.9 MPa in the art tube.
- The rated current of the discharge lamp was 75 A, likewise, the rated voltage was 27 V, and the rated power was 2.0 kW thereof.

As apparent from the experimental results shown in Fig. 7, it was confirmed that, when the number of lightings of the short time lighting was 5 to 20 times (i.e., the above conditions "b" and "c"), the amplitude of the lamp voltage was small, thus the occurrence of the flicker was certainly suppressed.

### REFERENCE SIGNS LIST

- 10: Discharge Lamp
- 11: Arc Tube
- 12: Luminous Portion
- 13: Electrode Support Portion
- 14: Sealing Portion
- 15: Anode
- 15a: Anode Body
- 15b: Electrode Rod
- 16: Cathode
- 16a: Cathode Body
- 16b: Electrode Rod
- 16c: Tungsten Carbide Layer
- 17: Glass Member
- 20: Lighting Circuit
- 21: Soft Start Circuit
- 22: First Rectifier and Smoothing Circuit
- 23: Inverter Circuit
- 24: Transformer Circuit
- 25: Second Rectifier and Smoothing Circuit
- 26: Igniter
- 30: Alternating Current Source
- 50: Controller
- C1, C2: Capacitors
- D1 - D6: Rectifier Diodes
- L1: Inductor
- R: Resistor
- S, S1 - S4: Switching Elements

## Claims

1. A discharge lamp lighting device, comprising:
a short arc type discharge lamp;
a lighting circuit for supplying power to the short arc type discharge lamp; and
a controller for controlling the lighting circuit,
the short arc type discharge lamp having:
an arc tube;
an anode and a cathode disposed in the arc tube such that the anode and the cathode faces each other; and
a xenon gas enclosed in the arc tube,
the cathode including an electron emissive material and a carbon component, and
the controller including a short time lighting circuit for carrying out a short time lighting operation that lights up the discharge lamp at least once or more in a short time during an idle period in which the discharge lamp does not light up constantly.

2. The discharge lamp lighting device according to Claim 1, wherein a total lighting time in the short time lighting operation is 0.1 to 700 seconds.

3. The discharge lamp lighting device according to Claims 1 or 2, wherein a number of lightings in the short time lighting operation is 1 to 20 times.

4. The discharge lamp lighting device according to any of Claims 1 to 3, wherein a lighting time per one of short time lighting in the short time lighting operation is 0.1 to 5 seconds.

5. The discharge lamp lighting device according to any of Claims 1 to 4, wherein a number of lightings in the short time lighting operation is twice or more, and an off time from when one short time lighting ends to when subsequent short time lighting starts is equal to or longer than 1 second.
